# EUROPEAN PATENT APPLICATION

(11) **EP 4 804 294 A1**
(43) Date of publication of application: **09.09.2026**
(21) Application number: 25770922.0
(22) Date of filing: 19.05.2025
(51) Int. Cl.: H01M 10/613, H01M 10/647, H01M 10/6568, H01M 50/209, H01M 50/258, H01M 50/262

(54) **BATTERY PACK AND ELECTRIC DEVICE**

(30) Priority: 31.12.2024 CN 202423320168 U; 31.12.2024 CN 202423318696 U; 31.12.2024 CN 202423320186 U; 31.12.2024 CN 202423319326 U
(71) Applicant: Eve Energy Co., Ltd., Huizhou, Guangdong 516000 (CN)
(72) Inventor: SHE, Chaoyue, Huizhou, Guangdong 516006 (CN)
(74) Representative: Stöckeler, Ferdinand
(86) International application number: PCT/CN2025/095799
(87) International publication number: WO 2026/143955

(57) **Abstract**

The application provides a battery pack and an electrical device. The battery pack includes a plurality of liquid cooling plates, a plurality of side frames, and a plurality of battery modules. The plurality of the liquid cooling plates are arranged sequentially and spaced apart along a gravitational direction. Each side frame is disposed between adjacent two of the liquid cooling plates, and each side frame has two ends connected to two of the liquid cooling plates. The plurality of the side frames and the plurality of the liquid cooling plates enclose and form a plurality of battery compartments. The plurality of the battery modules are respectively installed in the plurality of the battery compartments, with two ends of each battery module, arranged oppositely along the gravitational direction, thermally connected to the liquid cooling plate.

## Description

The present application claims priority to Chinese patent applications No: 202423320168.9, 202423318696.0, 202423320186.7, and 202423319326.9, filed with the China National Intellectual Property Administration on December 31, 2024, and the entire contents of the above applications are incorporated herein by reference.

### TECHNICAL FIELD

The present application relates to a technical field of electrical devices, specifically relating to a battery pack and an electrical device.

### BACKGROUND

A battery pack typically comprises a housing and a battery module disposed within the housing. To enhance the energy density of the battery pack, a double-layer battery module is commonly arranged within the housing. The double-layer battery module includes an upper-layer battery module and a lower-layer battery module, the upper-layer battery module requires an intermediate support plate for support and an upper-layer liquid cooling plate for cooling, and the lower-layer battery module requires a bottom support plate for support and a lower-layer liquid cooling plate for cooling.

### SUMMARY

The design of the double-layer battery module results in a complex internal structure of the battery pack and uneven heat dissipation in the double-layer battery module.

In a first aspect, a battery pack is provided, comprising:
a plurality of liquid cooling plates arranged sequentially and spaced apart along a gravitational direction;
a plurality of side frames, wherein each side frame is disposed between adjacent two of the liquid cooling plates, each side frame has two ends connected to two of the liquid cooling plates, and the plurality of the side frames and the plurality of the liquid cooling plates collectively enclose and form a plurality of battery compartments; and
a plurality of battery modules respectively installed in the plurality of the battery compartments, wherein two ends of each battery module, arranged oppositely along the gravitational direction, are thermally connected to corresponding liquid cooling plates.

In a second aspect, an embodiment of the present application provides an electrical device comprising the battery pack.

### Advantageous Effects

In embodiments of the present application, the liquid cooling plate and the side frame collectively enclose and form a plurality of battery compartments, providing a stable support framework for a battery module, thereby simplifying the internal structure of the battery pack. Since the battery module is enclosed by the side frame, the side frame effectively resists an expansion force generated by thermal expansion and contraction of the battery module during charging and discharging, reducing damage or deformation of the battery module due to expansion. Both ends of each battery module are cooled by the liquid cooling plate, which helps reduce a temperature gradient in the battery module, enabling uniform heat dissipation across the plurality of the battery modules, thereby enhancing the operational efficiency and lifespan of the battery module. Uniform temperature distribution not only improves the operational efficiency of the battery module but also reduces performance inconsistencies among battery modules caused by temperature differences.

### BRIEF DESCRIPTION OF THE DRAWINGS

FIG. 1 is a schematic structural diagram of a battery pack provided by a possible implementation of the present application;
FIG. 2 is a cross-sectional schematic diagram of a partial structure (first perspective) of the battery pack shown in FIG. 1;
FIG. 3 is a partial enlarged schematic diagram at a A region shown in FIG. 2;
FIG. 4 is a cross-sectional schematic diagram of a side frame, a liquid cooling plate, and a cover portion assembled as shown in FIG. 1;
FIG. 5 is a partial enlarged schematic diagram at a B region shown in FIG. 4;
FIG. 6 is a schematic structural diagram of a second side frame provided by a possible implementation of the present application;
FIG. 7 is a schematic structural diagram of a side frame provided by a possible implementation of the present application;
FIG. 8 is a partial enlarged schematic diagram at a C region shown in FIG. 7;
FIG. 9 is a cross-sectional schematic diagram of the side frame shown in FIG. 7;
FIG. 10 is a partial enlarged schematic diagram at a D region shown in FIG. 9;
FIG. 11 is a schematic structural diagram of a reinforcement member provided by a possible implementation of the present application;
FIG. 12 is a schematic structural diagram of a longitudinal beam provided by a possible implementation of the present application;
FIG. 13 is a cross-sectional schematic diagram of the battery pack shown in FIG. 1;
FIG. 14 is a partial enlarged schematic diagram at an E region shown in FIG. 1;
FIG. 15 is a cross-sectional schematic diagram of a partial structure (second perspective) of the battery pack provided by a possible implementation of the present application;
FIG. 16 is a partial enlarged schematic diagram at a F region shown in FIG. 15;
FIG. 17 is a schematic structural diagram of a partial structure of the battery pack shown in FIG. 1;
FIG. 18 is a cross-sectional schematic diagram of a partial structure (third perspective) of the battery pack shown in FIG. 17; and
FIG. 19 is a partial enlarged schematic diagram at a G region shown in FIG. 18.

Description of Reference Numerals:
100, battery pack; 10, liquid cooling plate; 11, first liquid cooling plate; 12, second liquid cooling plate; 13, third liquid cooling plate; 131, sub-liquid cooling plate; 132, first side surface; 133, second side surface; 14, mounting hole; 15, first threaded hole; 16, third groove; 20, side frame; 21, first side frame; 22, second side frame; 221, through hole; 222, expansion beam; 23, edge beam; 24, longitudinal beam; 241, connecting portion; 242, protruding portion; 243, second side wall; 244, insertion hole; 2441, sub-hole; 25, reinforcement member; 251, connecting seat; 2511, welding hole; 252, insertion portion; 2521, first side wall; 2522, fourth groove; 2523, protruding post; 26, third through hole; 30, battery module; 31, battery cell; 40, end plate; 41, maintenance window; 51, battery compartment; 52, first electrical compartment; 53, second electrical compartment; 61, first electrical component; 62, second electrical component; 70, cover portion; 71, cover body; 72, connecting main body; 80, cover plate; 90, connecting member; 91, third threaded connector; 110, reinforcing member; 1101, first threaded connector; 120, elastic thermally conductive portion; 130, first thermally conductive member; 140, heating portion; 141, heating plate; 1411, first heating plate; 1412, second heating plate; 150, second threaded connector; 161, first through hole; 162, second through hole; 171, second threaded hole; 172, third threaded hole; 180, second thermally conductive member.

### DETAILED DESCRIPTION

A battery pack typically comprises a housing and a battery module disposed within the housing. To enhance the energy density of the battery pack, a double-layer battery module is commonly arranged within the housing. The double-layer battery module includes an upper-layer battery module and a lower-layer battery module, the upper-layer battery module requires an intermediate support plate for support and an upper-layer liquid cooling plate for cooling, and the lower-layer battery module requires a bottom support plate for support and a lower-layer liquid cooling plate for cooling. The above design leads to a complex internal structure of the battery pack and uneven heat dissipation in the double-layer battery module.

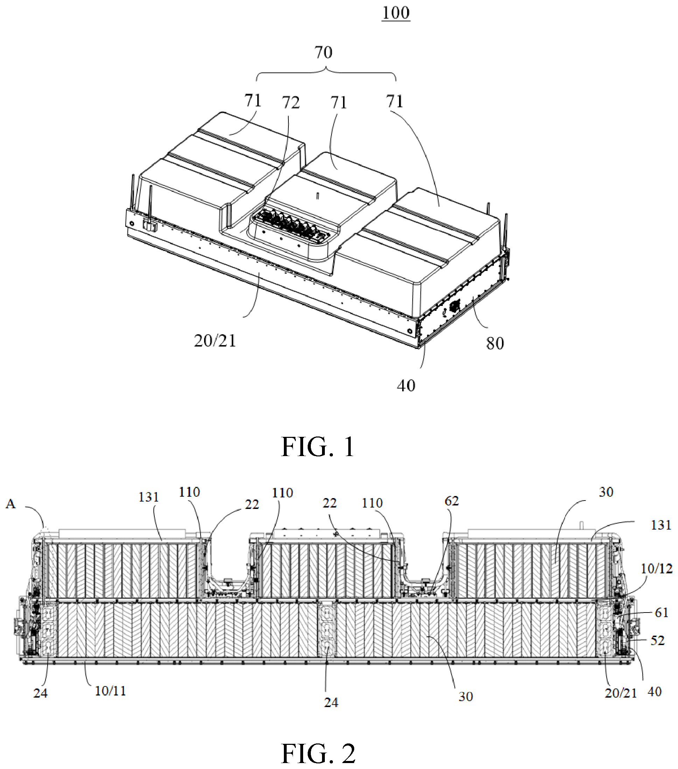

In view of the above issue, the present application sets forth a battery pack. FIGs. 1 to 19 are schematic structural diagrams of an embodiment of the battery pack provided by the present application. The battery pack simplifies the internal structure and enables uniform heat dissipation among a plurality of battery modules in the battery pack. The battery pack is described in detail below with reference to the main drawings.

Referring to FIGs. 1 to 4, a battery pack 100 comprises a plurality of liquid cooling plates 10, a plurality of side frames 20, and a plurality of battery modules 30, arranged sequentially and spaced apart along a gravitational direction. Each side frame 20 is disposed between adjacent two of the liquid cooling plates 10, each side frame 20 has two ends connected to two of the liquid cooling plates 10. The plurality of the side frames 20 and the plurality of the liquid cooling plates 10 collectively enclose and form a plurality of battery compartments 51. The plurality of the battery modules 30 are respectively installed in the plurality of the battery compartments 51, and two ends of each battery module 30, arranged oppositely along the gravitational direction, are thermally connected to corresponding liquid cooling plates 10.

In embodiments of the present application, the liquid cooling plate 10 and the side frame 20 collectively enclose and form the plurality of the battery compartments 51, providing a stable support framework for the battery module 30, thereby simplifying the internal structure of the battery pack 100. Since the battery module 30 is enclosed by the side frame 20, the side frame 20 effectively resists an expansion force generated by thermal expansion and contraction of the battery module 30 during charging and discharging, reducing damage or deformation of the battery module 30 due to expansion. Both ends of each battery module 30 are cooled by the liquid cooling plate 10, which helps reduce a temperature gradient in the battery module 30, enabling uniform heat dissipation across the plurality of the battery modules 30, thereby enhancing the operational efficiency and lifespan of the battery module 30. Uniform temperature distribution not only improves the operational efficiency of the battery module 30 but also reduces performance inconsistencies among battery modules 30 caused by temperature differences.

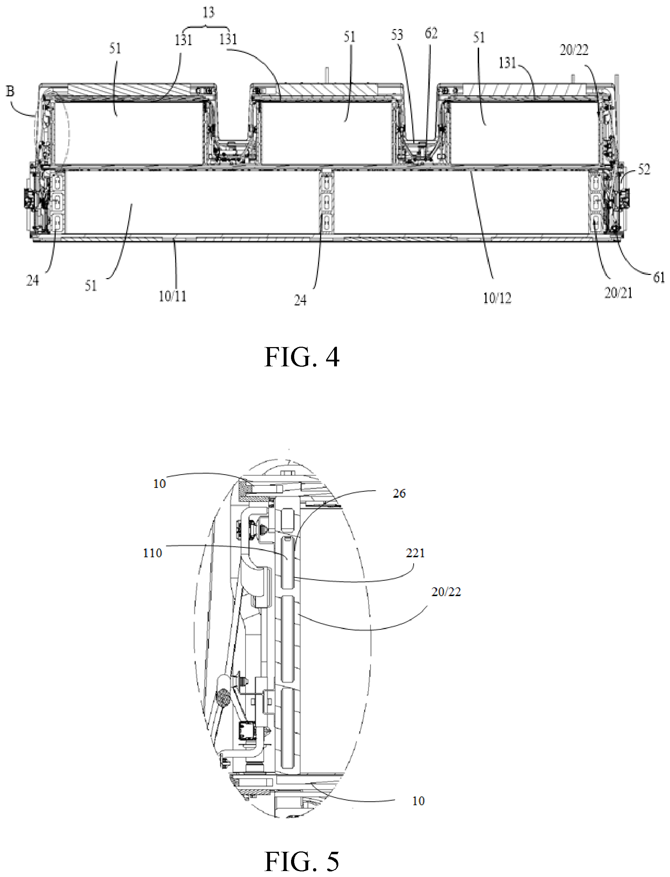

Referring to FIGs. 2 and 4, in some embodiments, the plurality of the liquid cooling plates 10 include a first liquid cooling plate 11 located at a lowest position along the gravitational direction. The plurality of the side frames 20 include a first side frame 21, and the first side frame 21 is installed on a side of the first liquid cooling plate 11 facing away from the gravitational direction. The battery pack 100 further comprises an end plate 40 and a first electrical component 61. The end plate 40 is disposed on a side of the first side frame 21 facing away from the battery compartment 51. The end plate 40, the side frame 20, and the first liquid cooling plate 11 collectively enclose and form a first electrical compartment 52. The first electrical component 61 is installed in the first electrical compartment 52. As such, the first liquid cooling plate 11 is enabled to cool the battery module 30 in the battery compartment 51 while simultaneously cooling the first electrical component 61 in the electrical compartment, improving the cooling efficiency of the first liquid cooling plate 11, reducing the number of required cooling components, and thereby lowering cost and complexity. The first electrical compartment 52 provides additional protection for the electrical component, preventing damage from dust, moisture, or other external contaminants.

Referring to FIGs. 2, 4, and 6, in some embodiments, the plurality of the liquid cooling plates 10 include a second liquid cooling plate 12 connected to the first side frame 21. The plurality of the side frames 20 further include at least two second side frames 22, the plurality of the second side frames 22 are connected to a side of the second liquid cooling plate 12 facing away from the gravitational direction. The plurality of the second side frames 22 are arranged spaced apart, each second side frame 22 has one of the battery modules 30 installed therein. As such, the second liquid cooling plate 12 is enabled to simultaneously cool the battery module 30 within the first side frame 21 and the battery module 30 in the second side frame 22, resulting in more uniform heat distribution in the battery pack 100, helping to reduce localized overheating and improving overall heat dissipation efficiency. The plurality of the second side frames 22 connected to the second liquid cooling plate 12 form a stable support structure, which helps resist deformation and damage to the battery pack 100 under external impact or vibration. By installing the battery module 30 in the second side frame 22 and connecting the battery module 30 to the second liquid cooling plate 12, the second side frame 22 can resist an expansion force of the battery module 30, reducing damage or deformation due to expansion. Each second side frame 22 having one of the battery modules 30 installed therein facilitates installation, maintenance, and replacement of the battery module 30, reducing the overall maintenance cost of the battery pack 100 and aiding heat dissipation of the battery module 30 in the second side frame 22.

It should be noted that a number of the battery modules 30 installed in the second side frame 22 can be set as needed. For example, the second side frame 22 may contain one, two, or even more battery modules 30, and the present application does not impose limitations thereon.

Referring to FIGs. 2 and 4, in some embodiments, the plurality of the liquid cooling plates 10 further include a third liquid cooling plate 13, the third liquid cooling plate 13 comprising a plurality of sub-liquid cooling plates 131. The plurality of the sub-liquid cooling plates 131 are arranged in one-to-one correspondence with the plurality of the second side frames 22, each sub-liquid cooling plate 131 connected to a side of the corresponding second side frame 22 facing away from the second liquid cooling plate 12. As such, each second side frame 22 is ensured to correspond to a sub-liquid cooling plate 131, guaranteeing sufficient cooling for the battery module 30 in the second side frame 22. The above design prevents localized heat accumulation in the battery pack 100, resulting in more uniform heat distribution and improved overall heat dissipation efficiency. A shorter flow path of coolant within the sub-liquid cooling plate 131 reduces flow resistance, enabling the cooling system to respond more quickly to temperature changes. When adding the battery module 30, only a corresponding second side frame 22 and a sub-liquid cooling plate 131 need to be added, without requiring large-scale modifications to the entire battery pack 100. The above design enhances the flexibility and scalability of the battery pack 100, allowing adaptation to future changes. The design of the sub-liquid cooling plate 131 ensures independent cooling for each battery module 30, reducing the risk of system failure due to localized overheating, thereby improving the overall reliability of the battery pack 100 and enabling stable operation in various harsh environments.

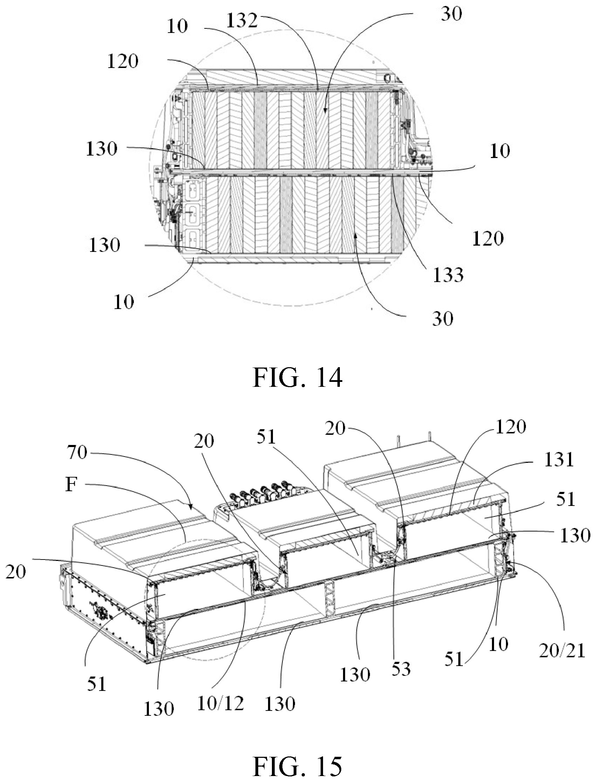

Referring to FIGs. 1 and 15, in some embodiments, the battery pack 100 further comprises a cover portion 70, the cover portion 70 is disposed on a side of the first side frame 21 facing away from the gravitational direction, and a peripheral edge of the cover portion 70 is connected to a peripheral edge of the first side frame 21. The third liquid cooling plate 13, the second side frame 22, and the second liquid cooling plate 12 are all located in the cover portion 70. The above design of the cover portion 70 provides protection for the third liquid cooling plate 13, the second side frame 22, the second liquid cooling plate 12, and the battery module 30, reducing the risk of damage to the battery pack 100. The tight connection between the cover portion 70 and the first side frame 21 helps prevent external impurities such as moisture and dust from entering the interior of the battery pack 100, protecting internal components from damage. Placing the third liquid cooling plate 13 and the second liquid cooling plate 12 within the cover portion 70 enables more effective heat exchange with a battery cell 31 inside the battery pack 100, helping to quickly dissipate heat generated by the battery module 30, lowering the temperature of the battery module 30, and improving the performance and lifespan of the battery module 30.

Referring to FIGs. 4 and 15, in some embodiments, the cover portion 70 and the second liquid cooling plate 12 collectively enclose and form a second electrical compartment 53. The battery pack 100 further comprises a second electrical component 62, the second electrical component 62 installed in the second electrical compartment 53 and electrically connected to the battery module 30 in the second side frame 22. As such, the length and complexity of electrical connection lines between the second electrical component 62 and the battery module 30 in the second side frame 22 is reduced, lowering the risk of electrical faults. The second electrical compartment 53 provides additional protection for the second electrical component 62, preventing damage from dust, moisture, or other external contaminants. The second liquid cooling plate 12 not only forms part of the second electrical compartment 53 but also serves a heat dissipation function, improving the compactness of the overall structure of the battery pack 100. The design of the second electrical compartment 53 allows easy access to the second electrical component 62 for inspection and maintenance by opening a compartment cover, simplifying operations.

Referring to FIGs. 1 and 15, in some embodiments, the cover portion 70 comprises a plurality of cover bodies 71 and a connecting main body 72. The plurality of the cover bodies 71 are arranged in one-to-one correspondence with the plurality of the second side frames 22, and each cover body 71 is configured to cover the corresponding second side frame 22 and sub-liquid cooling plate 131. The connecting main body 72 surrounds a peripheral side of the plurality of the cover bodies 71 and is connected to an end of the plurality of the cover bodies 71 adjacent to the second liquid cooling plate 12. A peripheral edge of the connecting main body 72 is connected to a peripheral edge of the first side frame 21. As such, spacing between adjacent cover bodies 71 is created, providing installation space for subsequent components. The spaces also serve as heat dissipation channels, facilitating heat dissipation from the battery module 30 installed in the cover body 71. The cover body 71 effectively covers the corresponding second side frame 22 and sub-liquid cooling plate 131, providing protection and isolation, preventing external contaminants such as dust and moisture from entering. The connecting main body 72, surrounding the peripheral side of the plurality of the cover bodies 71 and connected to the cover bodies 71 and the first side frame 21, forms a stable structural framework. The above design not only enhances the overall structural strength of the cover portion 70 but also integrates the plurality of the cover bodies 71, simplifying installation and removal of the cover bodies 71.

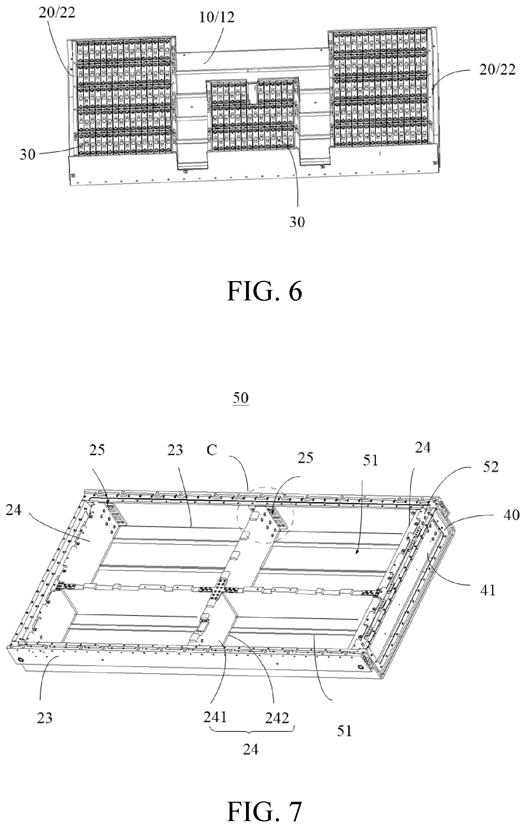

Referring to FIGs. 1 and 7, in some embodiments, a side portion of the end plate 40 is provided with a maintenance window 41, and the maintenance window 41 communicates with the first electrical compartment 52. As such, maintenance personnel is allowed to directly observe the internal conditions of the first electrical compartment 52, enabling faster identification of abnormalities. A cover plate 80 is detachably connected to the end plate 40, allowing maintenance personnel to easily open the cover plate 80 to access the first electrical compartment 52 for maintenance and inspection without disassembling the entire battery pack 100, significantly saving maintenance time and costs. The cover plate 80 also provides a degree of protection, preventing external debris from entering the first electrical compartment 52 and damaging internal components of the battery pack 100.

Referring to FIGs. 7 to 10, in some embodiments, the side frame 20 comprises two edge beams 23, a plurality of longitudinal beams 24, and a plurality of reinforcement members 25. The two edge beams 23 are arranged oppositely and spaced apart along a first direction, and each edge beam 23 extends along a second direction, the first direction. The second direction, and the gravitational direction pairwise intersect. The plurality of the longitudinal beams 24 are arranged spaced apart along the second direction. The above cross-arrangement provides a stable support structure in both directions, effectively enhancing the overall structural stability of the frame. Each longitudinal beam 24 extends along the first direction. The plurality of the reinforcement members 25 are arranged corresponding to end portions of the plurality of the longitudinal beams 24, and each reinforcement member 25 comprises a connecting seat 251 and an insertion portion 252 protruding from the connecting seat 251. The connecting seat 251 is fixedly connected to the edge beam 23, and the insertion portion 252 is inserted and engaged with an end portion of a corresponding one of the longitudinal beams 24. The insertion portion 252 has two first side walls 2521 arranged oppositely along the second direction, and the two first side walls 2521 are fixedly connected to a corresponding one of the longitudinal beams 24 via a plurality of connecting members 90. As such, the reinforcement member 25 disposed at the end portion of the longitudinal beam 24 with the connecting seat 251 fixedly connected to the edge beam 23 secures the position of the connecting seat 251. The insertion engagement between the insertion portion 252 and the longitudinal beam 24 simplifies the assembly process and increases a contact area between the insertion portion 252 and the longitudinal beam 24, enhancing the connection strength between the longitudinal beam 24 and the edge beam 23, further improving the overall structural stability of the side frame 20.

Additionally, the connecting seat 251 of the reinforcement member 25 is fixedly connected to the edge beam 23, and the insertion portion 252 is inserted into the longitudinal beam 24 and secured with the plurality of the connecting members 90. The above design enables the reinforcement member 25 to effectively transmit and distribute external forces, enhancing the bending and torsional resistance of the side frame 20, meeting the structural strength requirements of a high-capacity battery pack 100. The insertion portion 252 of the reinforcement member 25 has two first side walls 2521 arranged oppositely along the second direction, fixedly connected to a corresponding one of the longitudinal beams 24 via the plurality of the connecting members 90. As such, a secure connection between the insertion portion 252 and the longitudinal beam 24 is ensured, preventing separation and improving the overall connection strength of the side frame 20. The two first side walls 2521, arranged oppositely along the second direction, provide ample operational space when securing the insertion portion 252 to a corresponding one of the longitudinal beams 24 with the connecting members 90, simplifying the connection and fixation process.

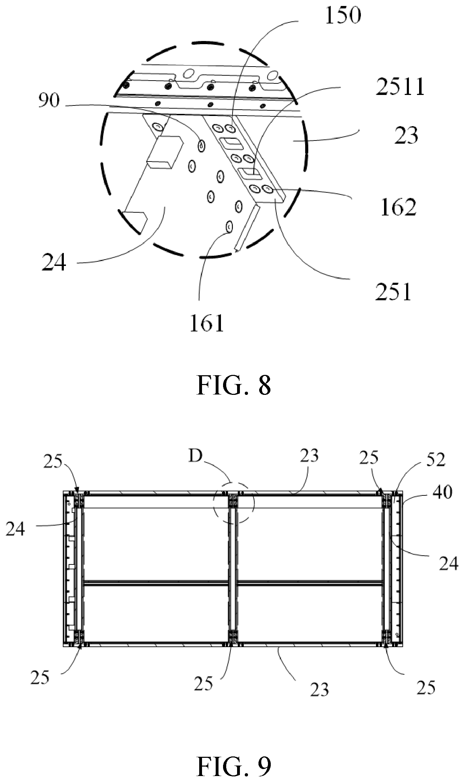

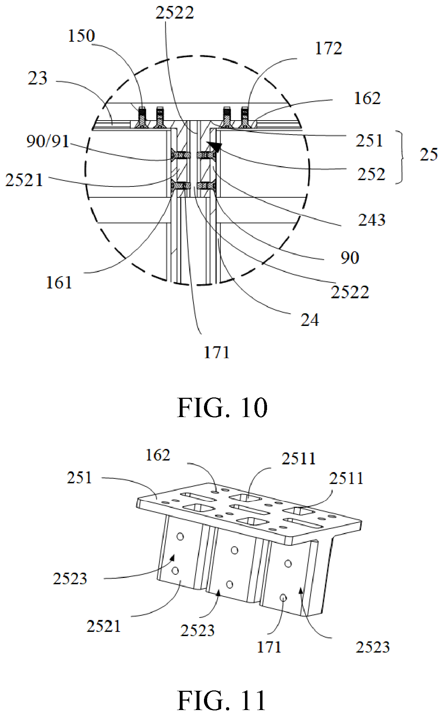

Referring to FIGs. 8 and 10, in some embodiments, the connecting seat 251 is fixed to the edge beam 23 by a plurality of second threaded connectors 150. As such, the threaded fixation can withstand significant tensile and shear forces, ensuring the strength and stability of the connection between the connecting seat 251 and the edge beam 23. The threaded fixation has a self-locking function, effectively preventing loosening due to vibration or external forces. The threaded fixation method is relatively simple, enabling quick connection between the connecting seat 251 and the edge beam 23, improving installation efficiency. The threaded fixation allows for disassembly of the connecting seat 251 and the edge beam 23 as needed.

It should be noted that the connection method between the connecting seat 251 and the edge beam 23 can be selected as needed. For example, in some embodiments, the connecting seat 251 and the edge beam 23 may also be fixed by both threaded fixation and welding, enhancing the stability of the connection. In other embodiments, the connecting seat 251 and the edge beam 23 may be fixed by welding or pin connection. In further embodiments, the connecting seat 251 and the edge beam 23 may be fixed by both welding and pin connection. The present application does not impose limitations thereon.

Referring to FIGs. 8 and 10, in some embodiments, the plurality of the connecting members 90 include a plurality of third threaded connectors 91, and each third threaded connector 91 fixes and connects the first side wall 2521 to a corresponding one of the longitudinal beams 24. As such, the threaded fixation can withstand significant tensile and shear forces, ensuring the strength and stability of the connection between the insertion portion 252 and the longitudinal beam 24. The threaded fixation has a self-locking function, effectively preventing loosening due to vibration or external forces. The threaded fixation method is relatively simple, enabling quick connection between the insertion portion 252 and the longitudinal beam 24, improving installation efficiency. The threaded fixation allows for disassembly of the insertion portion 252 and the longitudinal beam 24 as needed.

It should be noted that the connection method between the insertion portion 252 and the longitudinal beam 24 can be selected as needed. For example, in some embodiments, the insertion portion 252 and the longitudinal beam 24 may also be fixed by both threaded fixation and welding, enhancing the stability of the connection. In other embodiments, the insertion portion 252 and the longitudinal beam 24 may be fixed by welding or pin connection. In further embodiments, the insertion portion 252 and the longitudinal beam 24 may be fixed by both welding and pin connection. The present application does not impose limitations thereon.

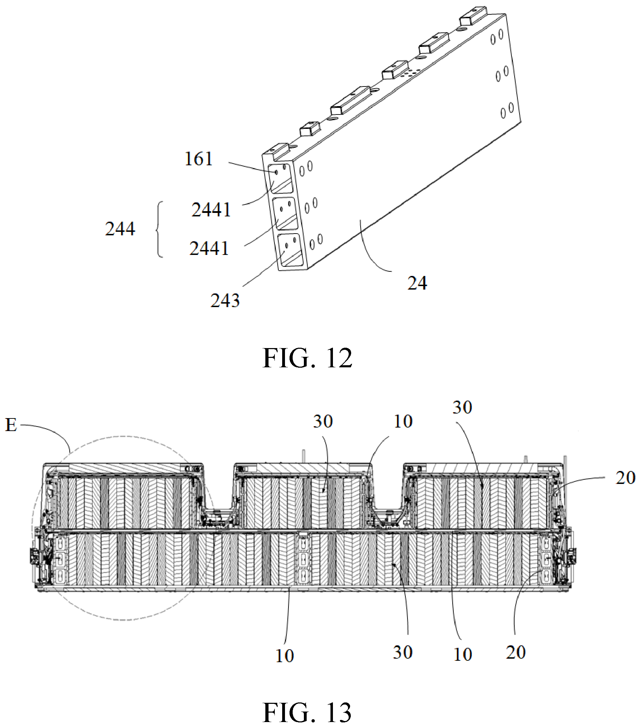

Referring to FIGs. 11 and 12, in some embodiments, the longitudinal beam 24 has two second side walls 243 arranged oppositely along a third direction, and each second side wall 243 is provided with a plurality of first through holes 161 penetrating along the third direction. The first side wall 2521 is provided with a plurality of second threaded holes 171 penetrating along the third direction, and the plurality of the second threaded holes 171 are arranged in one-to-one correspondence with the plurality of the first through holes 161. Threaded ends of the plurality of the third threaded connectors 91 pass through the plurality of the first through holes 161 and are threadedly connected to the corresponding plurality of second threaded holes 171. As such, the threaded fixation can withstand significant tensile and shear forces, ensuring the strength and stability of the connection between the insertion portion 252 and the longitudinal beam 24. The threaded fixation has a self-locking function, effectively preventing loosening due to vibration or external forces. The threaded fixation method is relatively simple, enabling quick connection between the insertion portion 252 and the longitudinal beam 24, improving installation efficiency. The threaded fixation allows for disassembly of the insertion portion 252 and the longitudinal beam 24 as needed.

Referring to FIG. 10, in some embodiments, an aperture of a first through hole 161 is at least partially tapered along a direction from a second side wall 243 to the first side wall 2521. The third threaded connector 91 includes a first tapered countersunk bolt, a threaded end of the first tapered countersunk bolt is adapted to be threadedly connected to a second threaded hole 171, and a head of the first tapered countersunk bolt adapted to be countersunk within the first through hole 161. The tapered head design of the first tapered countersunk bolt fits within the tapered aperture of the first through hole 161, allowing the head to be flush with or recessed below a surface of the second side wall 243 upon installation, achieving an aesthetically pleasing assembly. Since the head of the first tapered countersunk bolt does not protrude from the surface of the second side wall 243, safety hazards such as scratches or collisions caused by the bolt head during use are avoided. The countersunk design ensures closer contact between the head of the first tapered countersunk bolt and the second side wall 243, enhancing connection stability and preventing loosening due to vibration or external forces. The compatibility of the head of the first tapered countersunk bolt with the first through hole 161 facilitates alignment with the threaded hole during installation, improving installation efficiency. The countersunk head within the first through hole 161 enhances space utilization within a compartment formed by the second side frame 22.

Referring to FIG. 10, in some embodiments, an end of the insertion portion 252 distal from a connecting seat 251 is provided with a fourth groove 2522, and the fourth groove 2522 communicates with a plurality of second threaded holes 171. The presence of the fourth groove 2522 allows installers to more easily pass the third threaded connector 91 through the corresponding second threaded hole 171 and quickly complete the fastening operation, improving installation efficiency. The design of the fourth groove 2522 helps reduce stress concentration in the insertion portion 252 during connection. When the third threaded connector 91 is tightened, the fourth groove 2522 disperses some stress, reducing the risk of cracking or damage to the insertion portion 252. The fourth groove 2522 also reduces the weight of the fastener.

Referring to FIGs. 8 and 10, in some embodiments, a connecting seat 251 is provided with a plurality of second through holes 162 penetrating along a second direction, the plurality of the second through holes 162 distributed on both sides of the insertion portion 252 along a third direction. Each edge beam 23 is provided with a plurality of third threaded holes 172 corresponding to the plurality of the second through holes 162. Threaded ends of the plurality of the second threaded connectors 150 pass through the plurality of the second through holes 162 and are threadedly connected to the corresponding plurality of third threaded holes 172. As such, the threaded fixation can withstand significant tensile and shear forces, ensuring the strength and stability of the connection between the connecting seat 251 and the edge beam 23. The threaded fixation has a self-locking function, effectively preventing loosening due to vibration or external forces. The threaded fixation method is relatively simple, enabling quick connection between the connecting seat 251 and the edge beam 23, improving installation efficiency. The threaded fixation allows for disassembly of the connecting seat 251 and the edge beam 23 as needed.

Referring to FIG. 10, in some embodiments, an aperture of a second through hole 162 is at least partially tapered along a direction from the insertion portion 252 to a connecting seat 251. The third threaded connector 91 includes a second tapered countersunk bolt, a threaded end of the second tapered countersunk bolt is adapted to be threadedly connected to a third threaded hole 172, and a head of the first tapered countersunk bolt adapted to be countersunk within the second through hole 162. The tapered head design of the second tapered countersunk bolt fits within the tapered aperture of the second through hole 162, allowing the head to be flush with or recessed below a surface of the connecting seat 251 upon installation, achieving an aesthetically pleasing assembly. Since the head of the second tapered countersunk bolt does not protrude from the surface of the connecting seat 251, safety hazards such as scratches or collisions caused by the bolt head during use are avoided. The compatibility of the head of the second tapered countersunk bolt with the tapered design of the second through hole 162 ensures tighter contact with an inner wall of the second through hole 162 when tightened, enhancing the stability and reliability of the connection between the edge beam 23 and the connecting seat 251. The tapered head design of the second tapered countersunk bolt helps disperse stress during connection, reducing the risk of cracking or damage at a connecting portion 241 due to stress concentration. The compatibility of the head of the second tapered countersunk bolt with the second through hole 162 facilitates alignment with the third threaded hole 172 during installation, improving installation efficiency. The countersunk head within the second through hole 162 enhances space utilization within a compartment formed by the second side frame 22.

Referring to FIG. 11, in some embodiments, a connecting seat 251 is further provided with a plurality of welding holes 2511 penetrating along a second direction, and the plurality of the welding holes 2511 are distributed on both sides of the insertion portion 252 along a third direction. The plurality of the welding holes 2511 are arranged adjacent to a peripheral edge of an edge beam 23 for welding fixation with the edge beam 23. As such, the connection strength between the connecting seat 251 and the edge beam 23 is enhanced, enabling the frame edge to withstand significant loads and vibrations. The welding holes 2511, distributed on both sides of the insertion portion 252 along the third direction, help disperse stress during welding, avoiding connection failure due to stress concentration.

In some embodiments, a peripheral edge of a connecting seat 251 is welded to the edge beam 23 such that the connection strength between the connecting seat 251 and the edge beam 23 is enhanced, enabling the frame edge to withstand significant loads and vibrations. Welding the peripheral edge of the connecting seat 251 to the edge beam 23 effectively prevents displacement or deformation of the connecting seat 251 during use, ensuring the stability of the entire structure. Welded connections provide excellent long-term stability, ensuring a consistently secure connection between the connecting seat 251 and the edge beam 23.

It should be noted that the feature of welding a peripheral edge of a welding hole 2511 to the edge beam 23 and the feature of welding a peripheral edge of a connecting seat 251 to the edge beam 23 can be implemented individually or simultaneously. When implemented simultaneously, the connection between the connecting seat 251 and the edge beam 23 is stable and secure.

The method of achieving insertion engagement between an end portion of the longitudinal beam 24 and the insertion portion 252 can be selected as needed. Referring to FIGs. 11 and 12, in some embodiments, an end portion of the longitudinal beam 24 is provided with an insertion hole 244, and the insertion portion 252 is inserted into the insertion hole 244, with a connecting seat 251 abutting the end portion of the longitudinal beam 24. The cooperative design of the insertion hole 244 and the insertion portion 252 simplifies and accelerates the connection process, improving connection efficiency. The tight engagement between the insertion hole 244 and the insertion portion 252 increases a contact area between the longitudinal beam 24 and the insertion portion 252, ensuring stability and reliability at a connecting portion 241, preventing structural failure at the connection. The insertion connection design helps disperse stress at the connecting portion 241, avoiding structural damage due to stress concentration, thereby enhancing the overall structural stability of the side frame 20. The cooperative design of the insertion hole 244 and the insertion portion 252 ensures precise positioning at the connecting portion 241, avoiding deviations or misalignments during connection. Precise engagement and positioning improve the assembly quality of the side frame 20, ensuring the strength and reliability of the connecting portion 241.

In other embodiments, an end portion of the insertion portion 252 may be provided with an insertion hole 244, with the longitudinal beam 24 inserted into the insertion hole 244. In further embodiments, the insertion portion 252 may be provided with a first insertion hole 244, and the longitudinal beam 24 may be provided with a second insertion hole 244, with an end portion of the longitudinal beam 24 inserted into the first insertion hole 244 and an end portion of the insertion portion 252 inserted into the second insertion hole 244. The present application does not impose limitations thereon.

Referring to FIG. 7, in some embodiments, the longitudinal beam 24 comprises a connecting portion 241 and two protruding portions 242. The connecting portion 241 abuts the liquid cooling plate 10, and the connecting portion 241 has two first sides arranged oppositely along a second direction. The two protruding portions 242 protrude from the two first sides, each protruding portion 242 welded to the liquid cooling plate 10. By providing the protruding portion 242, welding between the longitudinal beam 24 and the liquid cooling plate 10 occurs primarily between the protruding portion 242 and the liquid cooling plate 10. Due to the relatively thin nature of the protruding portion 242, a heat capacity of the protruding portion 242 is low, allowing the protruding portion 242 to heat up quickly and reach a melting temperature to form a weld seam, thereby ensuring that a temperature rise of the liquid cooling plate 10 remains within an allowable range when the longitudinal beam 24 achieves a required weld penetration, avoiding risks of overheating and weld-through. As such, balance of the need for weld penetration of the longitudinal beam 24 with preventing weld-through of the liquid cooling plate 10 can be achieved, reducing the risk of weld-through and improving welding quality.

In some embodiments, along a thickness direction of the liquid cooling plate 10, a dimension of a protruding portion 242 is H3, where 1.5 mm ≤ H3 ≤ 2.5 mm. The dimension range of the protruding portion 242 along the thickness direction of the liquid cooling plate 10 significantly affects welding outcomes. When the dimension of the protruding portion 242 is too small, a heat capacity may be insufficient, making forming a stable weld seam difficult, or the protruding portion 242 may fully melt before achieving the required weld penetration for the side frame 20, affecting welding quality. When the dimension is too large, under the same welding energy, the heating rate of the protruding portion 242 slows, prolonging welding time and potentially transferring excessive heat to the liquid cooling plate 10, increasing the risk of weld-through. The above dimension range is determined by comprehensively considering factors such as welding efficiency, weld penetration control, and protection of the liquid cooling plate 10, ensuring that the temperature rise of the liquid cooling plate 10 remains within an allowable range while meeting the weld penetration requirements of the side frame 20, improving welding success rate and quality.

It should be noted that, along the thickness direction of the liquid cooling plate 10, the dimension of the protruding portion 242 may be 1.5 mm, 1.6 mm, 1.9 mm, 2 mm, 2.3 mm, 2.4 mm, or 2.5 mm, etc. The present application does not impose limitations thereon.

Along an extension direction of the liquid cooling plate 10, a distance by which a protruding portion 242 protrudes from a connecting portion 241 is L, where 2 mm ≤ L ≤ 4 mm. The distance by which the protruding portion 242 protrudes from the connecting portion 241 along the extension direction of the liquid cooling plate 10 significantly affects technical outcomes and connection strength between the side frame 20 and the liquid cooling plate 10. An over small distance may increase the proportion of heat conducted to the connecting portion 241, where a thicker connecting portion 241 heats up slowly, making the side frame 20 difficult to achieve weld penetration, and correspondingly increasing the risk of weld-through for the liquid cooling plate 10. An over large distance affects the compactness of the overall structure of the side frame 20, making precisely controlling heat concentration in the protruding portion 242 during welding difficult, potentially leading to uneven welding, affecting weld seam quality and weld penetration control of the side frame 20. The over large distance may also cause uneven stress transmission between the liquid cooling plate 10 and the side frame 20 under external forces, affecting the connection strength of the liquid cooling plate 10 and thus the structural strength of a battery pack 100. Therefore, a distance range of 2 mm to 4 mm for the protruding portion 242 protruding from the connecting portion 241 along the extension direction of the liquid cooling plate 10 helps control a heat concentration area during welding, ensuring that a weld seam forms primarily between the protruding portion 242 and the liquid cooling plate 10, which balances the need for weld penetration of the side frame 20 with preventing weld-through of the liquid cooling plate 10, ensuring connection strength between the liquid cooling plate 10 and the side frame 20, thereby ensuring the structural strength of the battery pack 100.

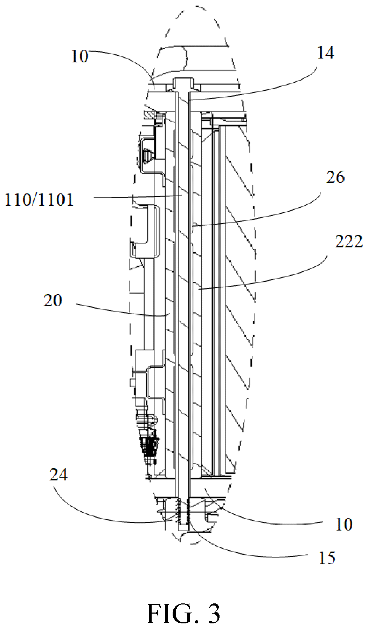

Referring to FIGs. 3 to 5, in some embodiments, a battery pack 100 further comprises a reinforcing member 110, and the reinforcing member 110 is connected to at least two of the plurality of the liquid cooling plates 10, ensuring a secure connection between the reinforcing member 110 and at least two of the liquid cooling plates 10. The reinforcing member 110 is configured to support the side frame 20 between at least two of the liquid cooling plates 10, enhancing the overall strength of the battery pack 100 and providing effective support for the side frame 20 between at least two of the liquid cooling plates 10. The above design enables the side frame 20, at least two of the liquid cooling plates 10, and the reinforcing member 110 to collectively form a robust framework, helping the side frame 20 resist an expansion force generated by a battery cell 31 of the battery module 30 during charging and discharging, preventing deformation of the battery pack 100, and inhibiting damage or deformation of the battery module 30 due to excessive expansion of the battery cell 31, thereby improving the overall modal characteristics of the battery pack 100, ensuring the stability and safety of the battery module 30 during long-term use.

It should be noted that the method by which the reinforcing member 110 supports the side frame 20 between at least two of the liquid cooling plates 10 can be selected as needed. For example, in some embodiments, the reinforcing member 110 may abut an outer side wall of the side frame 20 between at least two of the liquid cooling plates 10. In other embodiments, the reinforcing member 110 may abut an outer side wall of the side frame 20 between at least two of the liquid cooling plates 10. In embodiments of the present application, the side frame 20 between at least two of the liquid cooling plates 10 is provided with a third through hole 26, and the reinforcing member 110 passes through the third through hole 26 of the side frame 20 and is threadedly connected at both ends to at least two of the liquid cooling plates 10. As such, a contact area between the reinforcing member 110 and the side frame 20 is increased, making the connection between the reinforcing member 110 and the side frame 20 tighter and more secure, thereby improving the strength and stability of the connection. The design of inserting a portion of the reinforcing member 110 into the third through hole 26 enhances the structural rigidity of the side frame 20, enabling better resistance to deformation under external forces and improved resistance to an expansion force generated by the battery module 30 during charging and discharging, ensuring the safety and stability of the battery module 30.

Referring to FIGs. 4 to 6, in some embodiments, the side frame 20 between at least two of the liquid cooling plates 10 includes the second side frame 22, the second side frame 22 provided with a through hole 221, and the through hole 221 penetrates the second side frame 22 along a gravitational direction. The reinforcing member 110 is arranged corresponding to the through hole 221, with a portion of the reinforcing member 110 inserted into the through hole 221 such that a contact area between the reinforcing member 110 and the second side frame 22 is increased, making the connection tighter and more secure, thereby improving the strength and stability of the connection. The design of inserting a portion of the reinforcing member 110 into the through hole 221 enhances the structural rigidity of the entire battery pack 100, enabling the second side frame 22 to better resist deformation under external forces and improved resistance to an expansion force generated by a battery cell 31 during charging and discharging, preventing deformation of the battery pack 100 and inhibiting damage or deformation of the battery cell 31 due to excessive expansion, ensuring the safety and stability of the battery module 30 in the battery pack 100.

Referring to FIGs. 3 and 4, in some embodiments, at least two of the plurality of the liquid cooling plates 10 connected to the reinforcing member 110 include a second liquid cooling plate 12 and a third liquid cooling plate 13. One of the third liquid cooling plate 13 and the second liquid cooling plate 12 is provided with a mounting hole 14, and the mounting hole 14 is arranged corresponding to the through hole 221. The other of the third liquid cooling plate 13 and the second liquid cooling plate 12 is provided with a first threaded hole 15, and the first threaded hole 15 is arranged corresponding to the through hole 221. The reinforcing member 110 includes a first threaded connector 1101, and a threaded end of the first threaded connector 1101 is adapted to pass through the mounting hole 14 and the through hole 221 and to be threadedly connected to the first threaded hole 15. As such, the reinforcing member 110 to the third liquid cooling plate 13 and the second liquid cooling plate 12 are tightly connected to each other via the first threaded connector 1101, forming a robust mechanical connection. Compared to other non-threaded connection methods (e.g., welding, riveting), the above connection offers higher strength and reliability, capable of withstanding greater external forces and vibrational impacts. The threaded connection of the first threaded connector 1101 enhances the strength of the connection point and the overall structural rigidity of the battery pack 100, helping to resist pressure from expansion of a battery cell 31, preventing deformation or rupture of the battery pack 100. The threaded connection method simplifies installation and removal of the reinforcing member 110, allowing easy disassembly without damaging other parts of the battery pack 100 during maintenance or replacement of the battery module 30.

It should be noted that the connection method between both ends of the reinforcing member 110 and a second liquid cooling plate 12 and a third liquid cooling plate 13 can be selected as needed. For example, in some embodiments, both ends of the reinforcing member 110 may be welded to the second liquid cooling plate 12 and the third liquid cooling plate 13. In other embodiments, both ends of the reinforcing member 110 may be adhesively bonded to the second liquid cooling plate 12 and the third liquid cooling plate 13. The present application does not impose limitations on the connection method.

Referring to FIG. 2, in some embodiments, a plurality of reinforcing members 110 are provided, the plurality of the reinforcing members 110 arranged spaced apart along a circumferential direction of the second side frame 22. As such, the spaced arrangement of the reinforcing members 110 along the circumferential direction of the second side frame 22 effectively disperses stress and pressure acting on the second side frame 22, with each reinforcing member 110 bearing a portion of the load, thereby improving the overall strength and load-bearing capacity of the structure. The spaced arrangement of the plurality of the reinforcing members 110 enhances the rigidity of the second side frame 22, enabling better resistance to deformation and bending, and increasing the battery pack 100's ability to resist an expansion force of a battery cell 31, helping inhibit damage or deformation of the battery cell 31 due to expansion, thereby ensuring the safety and stability of the battery module 30 in the battery pack 100.

Referring to FIGs. 2 and 3, in some embodiments, the second side frame 22 includes two oppositely arranged expansion beams 222, with a plurality of reinforcing members 110 distributed across the two expansion beams 222. During charging and discharging, a battery cell 31 generates an expansion force that acts on the expansion beam 222. The combination of the two oppositely arranged expansion beams 222 and the plurality of the reinforcing members 110 enhances the structural rigidity of the expansion beam 222, enabling better resistance to deformation caused by the expansion of the battery cell 31.

It should be noted that the method of distributing a plurality of reinforcing members 110 across the two expansion beams 222 can be selected as needed. For example, in some embodiments, at least some of the plurality of the reinforcing members 110 may be located outside a first cavity and abut a side of two longitudinal beams 24 facing away from each other. In some embodiments, at least some of the plurality of the reinforcing members 110 may be located inside the first cavity and abut a side of two longitudinal beams 24 adjacent to each other. In other embodiments, some of the plurality of the reinforcing members 110 may be located inside the first cavity and abut a side of two longitudinal beams 24 adjacent to each other, while some may be located outside the first cavity and abut a side of two longitudinal beams 24 facing away from each other. In embodiments of the present application, the plurality of the reinforcing members 110 penetrate the two expansion beams 222 and are fixedly connected to a second liquid cooling plate 12 and a third liquid cooling plate 13, respectively. In other embodiments, the plurality of the reinforcing members 110 may partially penetrate the two expansion beams 222, with some located inside the first cavity and abutting the expansion beam 222, and some located outside the first cavity and abutting the expansion beam 222. The present application does not impose limitations on the method of distribution.

Referring to FIGs. 2 and 3, in some embodiments, the side frame 20 between at least two of the liquid cooling plates 10 further includes a first side frame 21, the reinforcing member 110 is adapted to be connected to the first side frame 21. The connection of the reinforcing member 110 to the first side frame 21 significantly enhances the structural strength of a battery pack 100. During charging and discharging, a battery cell 31 generates an expansion force, and the presence of the reinforcing member 110 disperses and resists the force, preventing deformation or rupture of the battery pack 100 due to expansion. Connecting the reinforcing member 110 to the first side frame 21 allows for more rational stress distribution in the battery pack 100, reducing localized stress concentration and enhancing stability under the expansion force of the battery cell 31. Under long-term exposure to the expansion force, the battery pack 100 maintains the original shape and performance, extending the lifespan. The modal frequency of the battery pack 100 is a critical indicator of dynamic structural characteristics of the battery pack 100. The connection of the reinforcing member 110 to the first side frame 21 increases the modal frequency, enabling better resistance to vibrations and impacts caused by external excitation.

In some embodiments, a battery pack 100 further comprises a filler, the filler filling a gap between the side frame 20 and the battery module 30. The filler effectively fills the gap, making the overall structure of the battery pack 100 more compact and complete, reducing voids and weak points, thereby enhancing overall rigidity. Increased rigidity reduces deformation under vibration, improving modal characteristics such as natural frequency and damping ratio. When subjected to external excitation, the filler slows the propagation of vibration waves within the structure, reducing the impact of vibrations on the battery module 30, protecting the battery module 30 from damage and extending the lifespan of the battery module 30. The filler also enhances safety by acting as a buffer during collisions or compression, reducing the impact of external forces on the battery module 30. The tight filling prevents displacement or loosening of the battery module 30 under vibration, reducing safety risks due to structural failure.

It should be noted that the type of the filler can be selected as needed. For example, in some embodiments, the filler may include foam adhesive, polyurethane, polypropylene, or polyimide, etc. The present application does not impose limitations thereon.

Referring to FIGs. 13 to 16, along a thickness direction of the liquid cooling plate 10, the battery module 30 has a top and a bottom, and the bottom of the battery module 30 are thermally connected to one of adjacent two of the liquid cooling plates 10. A battery pack 100 further comprises a plurality of elastic thermally conductive portions 120, the top of each battery module 30 is thermally connected to the other of adjacent two of the liquid cooling plates 10 via one of the elastic thermally conductive portions 120. The liquid cooling plate 10, through internally flowing coolant, effectively absorbs and dissipates a large amount of heat generated by the battery module 30 during operation, ensuring the battery module 30 remains within a suitable operating temperature range, avoiding performance and lifespan degradation due to overheating. Since the liquid cooling plates 10 are sequentially spaced apart, the battery module 30 between adjacent two of the liquid cooling plates 10 receives uniform cooling, reducing temperature differences among battery modules 30 and improving the temperature uniformity of the entire battery pack 100. The bottom of the battery module 30 is thermally connected to one adjacent liquid cooling plate 10, ensuring effective heat transfer to the liquid cooling plate 10 for dissipation. The top of the battery module 30 is thermally connected to the other liquid cooling plate 10 via the elastic thermally conductive portion 120, which not only effectively transfers heat from the battery module 30 to the liquid cooling plate 10 for cooling the top but also acts as a buffer during vibrations, reducing stress on a pole of a battery cell 31.

The type of the elastic thermally conductive portion 120 can be selected as needed. For example, the elastic thermally conductive portion 120 may include a thermally conductive silicone pad, a polyimide elastic thermally conductive portion 120, or a thermally conductive adhesive, etc. In embodiments of the present application, the elastic thermally conductive portion 120 includes a thermally conductive gel, which has high thermal conductivity, effectively transferring heat from the top of the battery module 30 to the liquid cooling plate 10, ensuring the battery pack 100 operates within a safe temperature range. The thermally conductive gel has excellent fluidity, filling microscopic gaps or irregular surfaces under pressure, forming tight contact that enhances heat conduction paths and improves the reliability of the connection between the liquid cooling plate 10 and the top of the battery module 30. The thermally conductive gel retains elasticity and flexibility after curing, absorbing vibration and impact forces, reducing stress on the pole of the battery cell 31. The thermally conductive gel compensates for dimensional changes due to differences in thermal expansion coefficients and provides sustained effective heat conduction during long-term operation, enhancing the long-term reliability and durability of the system.

In some embodiments, a thickness of the elastic thermally conductive portion 120 is H1, wherein 3 mm ≤ H1 ≤ 5 mm. The thickness range enables the elastic thermally conductive portion 120 to effectively transfer heat generated by the battery module 30. The thickness range of 3 mm to 5 mm helps control thermal resistance, preventing heat accumulation during conduction, maintaining stable operating temperatures for the battery module 30, and preventing performance degradation or damage due to overheating. The thickness range of 3 mm to 5 mm provides sufficient structural strength to resist vibrations and impacts from the external environment, protecting the battery module 30 from damage and ensuring the reliability and durability of a battery pack 100.

Additionally, as the thickness of the elastic thermally conductive portion 120 is increased, a heat conduction path within the thermally conductive material is lengthened. When the thickness exceeds 5 mm, heat transfer efficiency decreases, preventing rapid transfer of heat generated by the battery module 30 to the liquid cooling plate 10, affecting the heat dissipation performance of a battery pack 100. A thickness greater than 5 mm increases thermal resistance, causing heat accumulation during transfer, potentially raising the operating temperature of the battery module 30, leading to performance degradation, reduced lifespan, or safety hazards. While increasing thickness may enhance structural strength to some extent, a thickness greater than 5 mm may cause uneven stress distribution within the elastic thermally conductive portion 120, reducing structural strength and increasing production costs. A thickness less than 3 mm may prevent the elastic thermally conductive portion 120 from withstanding significant pressure or impact, making a battery pole susceptible to deformation or damage. The elastic thermally conductive portion 120, typically made of polymer materials, is prone to aging under prolonged use or high temperatures, and a thinner conductive layer may be more susceptible to aging, degrading the thermal conductivity and structural strength of the elastic thermally conductive portion 120.

It should be noted that the thickness of the elastic thermally conductive portion 120 may be 3 mm, 3.5 mm, 3.9 mm, 4 mm, 4.3 mm, 4.5 mm, 4.8 mm, or 5 mm, etc. The present application does not impose limitations thereon.

Referring to FIGs. 13 and 14, in some embodiments, the other of adjacent two of the liquid cooling plates 10 has a first side surface 132 facing a top of a corresponding battery module 30, and the first side surface 132 has a first heat exchange zone. Along a thickness direction of the liquid cooling plate 10, a projection of the battery module 30 on the other of adjacent two of the liquid cooling plates 10 is located within the first heat exchange zone, with at least a portion of the elastic thermally conductive portion 120 covering the first heat exchange zone. Since the battery module 30 is projected within the first heat exchange zone and the elastic thermally conductive portion 120 at least partially covers the first heat exchange zone, the elastic thermally conductive portion 120 acts as a heat conduction bridge, effectively transferring heat generated by the battery module 30 to the liquid cooling plate 10 for dissipation via coolant, optimizing the heat flow path and improving the heat dissipation efficiency of the battery module 30. The elastic thermally conductive portion 120 not only conducts heat but also absorbs and buffers impact forces on the battery module 30, enhancing the shock resistance of the entire battery pack 100.

It should be noted that a shape and a size of the elastic thermally conductive portion 120 can be set as needed, and the present application does not impose limitations thereon.

In some embodiments, a side of the other of adjacent two of the liquid cooling plates 10 facing a top of the battery module 30 is provided with a first groove, the first groove located in a first heat exchange zone, with the elastic thermally conductive portion 120 positioned within the first groove, thereby ensuring that the elastic thermally conductive portion 120 transfers heat more directly to the liquid cooling plate 10, improving heat dissipation efficiency. The design of the first groove prevents the elastic thermally conductive portion 120 from detaching or loosening during long-term use, maintaining effective heat exchange between the battery module 30 and the liquid cooling plate 10, lowering the operating temperature of the battery module 30, and improving the energy conversion efficiency of a battery pack 100.

Referring to FIGs. 14 to 16, in some embodiments, a battery pack 100 further comprises a plurality of first thermally conductive members 130, and a bottom of each battery module 30 is thermally connected to a corresponding one of the liquid cooling plates 10 via one of the first thermally conductive members 130. The first thermally conductive member 130 acts as a heat conduction bridge, rapidly transferring heat generated at the bottom of the battery module 30 to the liquid cooling plate 10, significantly shortening the heat transfer path and improving heat dissipation efficiency. By effectively transferring heat, the first thermally conductive member 130 significantly reduces thermal stress caused by temperature differences between the battery module 30 and the liquid cooling plate 10, extending the lifespan of the battery pack 100 and reducing faults and damage due to thermal stress.

It should be noted that the type of the first thermally conductive member 130 can be selected as needed. For example, the first thermally conductive member 130 may include at least one of a thermally conductive structural adhesive or a thermally conductive filler. In other embodiments, the first thermally conductive member 130 may include a thermally conductive structural adhesive and a thermally conductive gel, stacked sequentially. The present application does not impose limitations on the type of the first thermally conductive member 130.

In embodiments of the present application, the first thermally conductive member 130 may include a thermally conductive structural adhesive, which has excellent thermal conductivity, rapidly conducting heat from a high-temperature region to a low-temperature region. In a battery pack 100, the thermally conductive structural adhesive serves as a heat conduction medium between a battery cell 31 and a heat dissipation component, effectively transferring heat generated by the battery module 30 to the liquid cooling plate 10 for rapid heat transfer and dissipation. The efficient heat dissipation method lowers the operating temperature of the battery pack 100, improving the energy conversion efficiency and stability of the battery pack. The thermally conductive structural adhesive also has excellent bonding properties, securing the battery module 30 to the liquid cooling plate 10, enhancing resistance to external impacts and vibrations, improving the impact resistance and durability of the battery pack 100, and ensuring stability and reliability during long-term use. The thermally conductive structural adhesive can be applied directly between the bottom of the battery module 30 and the liquid cooling plate 10, forming a thin thermally conductive layer, reducing assembly steps and costs in production and improving production efficiency.

In some embodiments, a thickness of the first thermally conductive member 130 is H2, wherein 3 mm ≤ H2 ≤ 5 mm. The thickness range enables the first thermally conductive member 130 to effectively transfer heat generated by the battery module 30. The thickness range of 3 mm to 5 mm helps control thermal resistance, preventing heat accumulation during conduction, maintaining stable operating temperatures for the battery module 30, and preventing performance degradation or damage due to overheating. The thickness range of 3 mm to 5 mm provides sufficient structural strength to resist vibrations and impacts from the external environment, protecting the battery module 30 from damage and ensuring the reliability and durability of a battery pack 100.

Additionally, as the thickness of the first thermally conductive member 130 is increased, a heat conduction path within the thermally conductive material is lengthened. When the thickness exceeds 5 mm, heat transfer efficiency decreases, preventing rapid transfer of heat generated by the battery module 30 to the liquid cooling plate 10, affecting the heat dissipation performance of a battery pack 100. A thickness greater than 5 mm increases thermal resistance, causing heat accumulation during transfer, potentially raising the operating temperature of the battery module 30, leading to performance degradation, reduced lifespan, or safety hazards. A thickness greater than 5 mm may increase production costs. A thickness less than 3 mm may prevent the first thermally conductive member 130 from withstanding significant pressure or impact, making the battery module 30 susceptible to deformation or damage. The first thermally conductive member 130, typically made of polymer materials, is prone to aging under prolonged use or high temperatures, and a thinner conductive layer may be more susceptible to aging, degrading the thermal conductivity and structural strength of the first thermally conductive member 130.

It should be noted that the thickness of the first thermally conductive member 130 may be 3 mm, 3.5 mm, 3.9 mm, 4 mm, 4.3 mm, 4.5 mm, 4.8 mm, or 5 mm, etc. The present application does not impose limitations thereon.

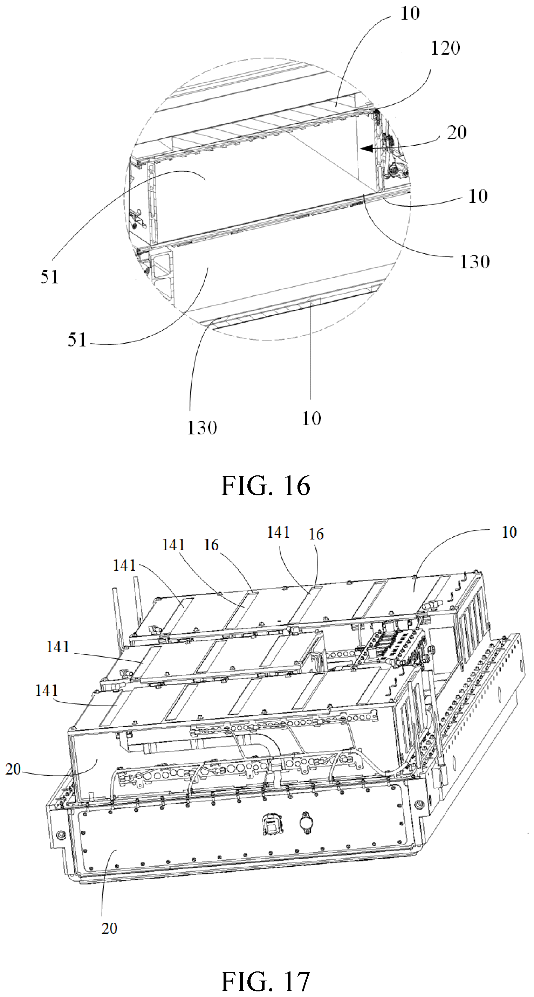

Referring to FIGs. 14 and 16, in some embodiments, one of adjacent two of the liquid cooling plates 10 has a second side surface 133 facing a bottom of the battery module 30, and the second side surface 133 has a second heat exchange zone. Along a thickness direction of the liquid cooling plate 10, a projection of the battery module 30 on one of adjacent two of the liquid cooling plates 10 is located within the second heat exchange zone, with at least a portion of the first thermally conductive member 130 covering the second heat exchange zone. Since the battery module 30 is projected within the second heat exchange zone and the first thermally conductive member 130 at least partially covers the second heat exchange zone, the first thermally conductive member 130 acts as a heat conduction bridge, effectively transferring heat generated by the battery module 30 to the liquid cooling plate 10 for dissipation via coolant, optimizing the heat flow path and improving the heat dissipation efficiency of the battery module 30.

It should be noted that a shape and a size of the first thermally conductive member 130 can be set as needed, and the present application does not impose limitations thereon.

In some embodiments, a side of one of adjacent two of the liquid cooling plates 10 facing a bottom of the battery module 30 is provided with a second groove, and the second groove is located in a second heat exchange zone, with the first thermally conductive member 130 positioned within the second groove. As such, the first thermally conductive member 130 is ensured to transfer heat more directly to the liquid cooling plate 10, improving heat dissipation efficiency. The design of the second groove prevents the first thermally conductive member 130 from detaching or loosening during long-term use, maintaining effective heat exchange between the battery module 30 and the liquid cooling plate 10, lowering the operating temperature of the battery module 30, and improving the energy conversion efficiency of a battery pack 100.

Referring to FIGs. 17 to 19, a battery pack 100 further comprises a plurality of heating portions 140, and the plurality of the heating portions 140 are arranged corresponding to and connected to the plurality of the liquid cooling plates 10, and are configured to heat the battery module 30. The above design enables uniform preheating of the battery module 30 in low-temperature environments via the heating portion 140, allowing the battery module 30 to reach a required operating temperature, thereby improving charging and discharging efficiency. The cooperative operation of the liquid cooling plate 10 and a heating portion 140 enhances the thermal management efficiency of the battery pack 100. When the temperature of the battery module 30 is high, heat exchange with the liquid cooling plate 10 lowers the temperature of the battery module 30; when the temperature is low, the heating portion 140 heats the battery module 30 such that the battery pack 100 adapts to various operating environments and temperature conditions, maintaining the optimal operating state of the battery module 30 in both high and low temperatures through regulation by the liquid cooling plate 10 and the heating portion 140.

It should be noted that there are multiple methods for a heating portion 140 to heat the battery module 30. For example, in some embodiments, the heating portion 140 directly heats the battery module 30. In other embodiments, heat provided by the heating portion 140 is transferred to a coolant via the liquid cooling plate 10, then to the battery module 30, achieving heating. In further embodiments, the heating portion 140 may directly heat the battery module 30 while radiating heat to a coolant, which then transfers heat to the battery module 30. The present application does not restrict the heating method.

Referring to FIGs. 17 to 19, in some embodiments, the liquid cooling plate 10 is provided with a third groove 16, a heating portion 140 embedded in the third groove 16. The design of the third groove 16 allows the heating portion 140 to be tightly embedded into the liquid cooling plate 10, reducing additional space requirements and making the overall structure of a battery pack 100 more compact. The compact design maximizes the energy density of the battery pack 100 while maintaining efficient thermal management. Embedding the heating portion 140 in the third groove 16 increases a contact area with the liquid cooling plate 10, enhancing heat exchange efficiency. A larger contact area enables faster heat transfer from the heating portion 140 to the liquid cooling plate 10 for dissipation or preheating. The embedded structure of the third groove 16 and the heating portion 140 increases connection strength, making the thermal management system more robust, preventing loosening or detachment of the heating portion 140 under vibration or impact, and improving the reliability and durability of the battery pack 100. The design of the third groove 16 simplifies the installation process of the heating portion 140, making the installation more convenient and efficient.

It should be noted that a shape of a third groove 16 can be selected as needed. For example, in some embodiments, a cross-section of the third groove 16 may be square, rectangular, or elliptical, etc. The present application does not impose limitations thereon.

The connection method between a heating portion 140 and the liquid cooling plate 10 can be selected as needed. For example, in some embodiments, the heating portion 140 and the liquid cooling plate 10 may be threadedly connected via threaded connectors. In other embodiments, the heating portion 140 and the liquid cooling plate 10 may be fixed by welding. The present application does not impose limitations thereon.

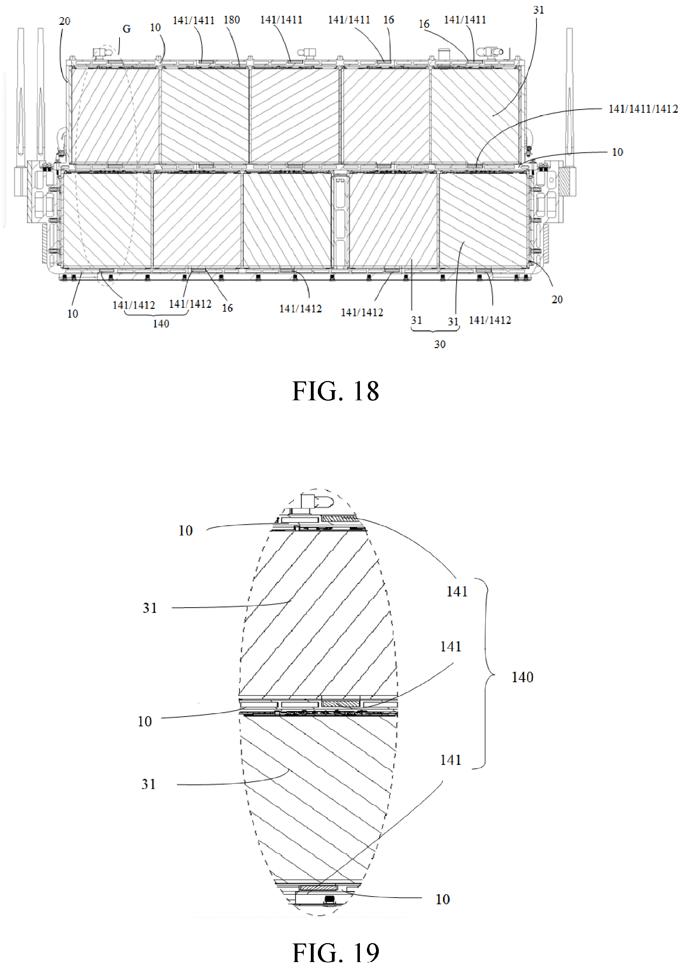

Referring to FIGs. 17 and 18, in some embodiments, a surface of a heating portion 140 facing away from a third groove 16 is flush with or below a peripheral edge of the third groove 16. A protruding heating portion 140 is more susceptible to impact or wear, while a design flush with or below the peripheral edge of the third groove 16 effectively reduces such impact and wear, extending the lifespan of the heating portion 140. A flush or lower design makes an external appearance of the liquid cooling plate 10 smoother and more aesthetically pleasing. When the surface of the heating portion 140 is flush with or below the peripheral edge of the third groove 16, an external contour of the liquid cooling plate 10 and the heating portion 140 becomes more compact and smooth, reducing unnecessary space waste and allowing for maximum installation of the battery modules 30.

Referring to FIG. 17, in some embodiments, a heating portion 140 comprises a plurality of heating plates 141, and the plurality of the heating plates 141 are arranged spaced apart along an extension direction of the liquid cooling plate 10. The spaced arrangement of the plurality of the heating plates 141 helps disperse heat, reducing the risk of localized overheating and improving temperature consistency among battery modules 30, thereby enhancing the performance and lifespan of a battery pack 100. The spacing between heating plates 141 facilitates maintenance, allowing easier access and replacement of damaged heating plates 141.

It should be noted that optimizing the arrangement and number of heating plates 141 can reduce costs while maintaining efficient thermal management.

Referring to FIGs. 18 and 19, in some embodiments, the battery module 30 comprises a plurality of battery cells 31, and each of a bottom and a top of each battery cell 31 corresponds to one of the heating plates 141. As such, uniform heating of a battery cell 31 from bottom to top is ensured, reducing an internal temperature gradient and improving heating efficiency. Uniform heating reduces temperature differences among battery cells 31 within the battery module 30, enhancing consistency, which extends the lifespan of the battery module 30 and reduces performance degradation due to temperature differences. The correspondence of heating plates 141 at the bottom and top of each battery cell 31 enables the battery module 30 to reach a suitable operating temperature more quickly in low-temperature environments, optimizing thermal management and improving the stability and reliability of the battery module 30.

Referring to FIG. 18, in some embodiments, a plurality of heating plates 141 include a first heating plate 1411 located at a top of a battery cell 31, and the first heating plate 1411 is located at a central location of the top of the battery cell 31. The central position of the first heating plate 1411 allows heat to diffuse evenly in all directions, reducing localized overheating or overcooling, enhancing temperature consistency across the battery cell 31. Compared to other positions, the central location of the first heating plate 1411 ensures relatively balanced distances to all parts of the battery cell 31, minimizing heat transfer path losses, enabling faster attainment of a suitable operating temperature, reducing preheating time, and improving the availability of the battery module 30 in low-temperature environments.

It should be noted that a number of first heating plates 1411 at a top of a battery cell 31 can be set as needed. For example, the number may be one, two, three, or more. When the number is one, the first heating plate 1411 may be at a central location of the top. When multiple, the plurality of the heating plates 141 may be arranged spaced apart along a peripheral edge of the top, positioned near the central location.

Referring to FIG. 18, in some embodiments, a plurality of heating plates 141 include a second heating plate 1412 located at a bottom of a battery cell 31, and the second heating plate 1412 is located at a central location of the bottom of the battery cell 31. The central position of the second heating plate 1412 allows heat to diffuse evenly in all directions, reducing localized overheating or overcooling, enhancing temperature consistency across the battery cell 31. Compared to other positions, the central location of the second heating plate 1412 ensures relatively balanced distances to all parts of the battery cell 31, minimizing heat transfer path losses, enabling faster attainment of a suitable operating temperature, reducing preheating time, and improving the availability of the battery module 30 in low-temperature environments.

It should be noted that the number of second heating plates 1412 at a bottom of a battery cell 31 can be set as needed. For example, the number may be one, two, three, or more. When the number is one, the second heating plate 1412 may be at a central location of the bottom. When multiple, the plurality of the heating plates 141 may be arranged spaced apart along a peripheral edge of the bottom, positioned near the central location.

In some embodiments, the plurality of the liquid cooling plates 10 include a second liquid cooling plate 12, the second liquid cooling plate 12 has two second sides arranged oppositely along a thickness direction of the second liquid cooling plate 12, each second side is provided with the battery module 30, and a heating portion 140 is disposed between the second side and the battery module 30. The above design enables the second liquid cooling plate 12 to exchange heat with two of the battery modules 30, improving heat exchange efficiency and allowing the two of the battery modules 30 to reach a required temperature range more quickly. The heating portion 140 between the second side and the battery module 30 provides additional heat when needed. The heating portion 140 also serves as a medium for more effective heat exchange between the battery module 30 and the liquid cooling plate 10. Since both second sides are provided with battery modules 30 and equipped with heating portions 140, consistent heat application during heating or cooling is ensured, reducing temperature differences and enhancing consistency among battery modules 30. The heating portion 140 between the second side and the battery module 30 ensures uniform temperature distribution and effective thermal management, extending the lifespan of the battery module 30.

In some embodiments, a heating portion 140 includes a positive temperature coefficient thermistor or a constant resistance heating element. When the heating portion 140 includes a positive temperature coefficient thermistor, the positive temperature coefficient thermistor offers excellent heating efficiency, rapidly converting electrical energy into heat to quickly heat the battery module 30. The positive temperature coefficient thermistor has an automatic temperature regulation feature, where a resistance of the positive temperature coefficient thermistor is increased with temperature, limiting current flow and reducing heating power. The above property enables precise temperature control of the battery module 30, preventing overheating or underheating, ensuring operation within a safe range. Precise temperature control improves the performance and reliability of the battery. At suitable operating temperatures, electrochemical reaction rates and ion migration rates increase, enhancing discharge performance and cycle life. The positive temperature coefficient thermistor provides overheat protection, sharply increasing resistance at excessively high temperatures to limit current, preventing damage to the battery module 30 due to overheating, enhancing system safety, and reducing risks of fire or explosion. The positive temperature coefficient thermistor exhibits excellent stability and reliability in long-term use, with limited resistance variation, ensuring consistent heating performance over time.

When a heating portion 140 includes a constant resistance heating element, a resistance of the constant resistance heating element remains stable within a certain temperature range, providing consistent heating power. The above stably heating performance ensures uniform and continuous heat delivery to the battery module 30 during heating, avoiding adverse effects from temperature fluctuations. The heating power of a constant resistance heating element can be precisely controlled by adjusting current or voltage, allowing flexible adjustment based on the specific needs and heating conditions of the battery module 30 for optimal heating effects. The stable heating performance simplifies the control system, reducing complexity and maintenance costs. The constant resistance heating element does not produce open flames or high-temperature hotspots, enhancing safety. If the temperature rises abnormally, the control system can promptly shut off the heating element, preventing damage or safety hazards like fires. Compared to complex heating systems, the constant resistance heating element is cost-effective, requiring no complex control systems or additional sensors, reducing the overall cost of the battery thermal management system, which is economically significant for the production and application of the battery module 30.

It should be noted that a heating portion 140 for heating the battery module 30 can be selected as needed. For example, in some embodiments, a positive temperature coefficient thermistor may be used. In other embodiments, a constant resistance heating element may be used. In further embodiments, a combination of both may be used. The present application does not impose limitations thereon.

In some embodiments, a battery pack 100 further comprises a plurality of second thermally conductive members 180, and the liquid cooling plate 10 and a heating portion 140 are both thermally connected to the battery module 30 via the second thermally conductive members 180. The second thermally conductive member 180 rapidly transfers heat generated by the battery module 30 to the liquid cooling plate 10, accelerating heat dissipation, quickly lowering the temperature of the battery module 30, and preventing safety hazards due to overheating. When the battery module 30 is too cold, the heating portion 140 can uniformly transfer heat to the battery module 30 via the second thermally conductive member 180, achieving rapid and uniform preheating, ensuring good performance in low-temperature environments. Efficient heat transfer ensures the battery module 30 operates within a suitable temperature range, preventing performance degradation due to overheating or overcooling.

It should be noted that the type of the second thermally conductive member 180 can be selected as needed. For example, the second thermally conductive member 180 may include thermally conductive adhesive, thermally conductive silicone sheet, thermally conductive sealant, or thermally conductive structural adhesive. The present application does not impose limitations thereon.

In a second aspect, embodiments of the present application propose an electrical device comprising a battery pack 100 as described in the embodiments. Since the electrical device adopts all technical solutions of the embodiments, the electrical device possesses all the beneficial effects of those technical solutions, which are not reiterated here.

It should be noted that an electrical device may include vehicles, energy storage power supplies, consumer electronics, medical equipment, smart cities, etc. The selection of an electrical device can be made as needed, and the present application does not impose limitations thereon.

## Claims

1. A battery pack (100), comprising:
a plurality of liquid cooling plates (10) arranged sequentially and spaced apart along a gravitational direction;
a plurality of side frames (20), wherein each side frame (20) is disposed between adjacent two of the liquid cooling plates (10), each side frame (20) has two ends connected to two of the liquid cooling plates (10), and the plurality of the side frames (20) and the plurality of the liquid cooling plates (10) collectively enclose and form a plurality of battery compartments (51); and
a plurality of battery modules (30) respectively installed in the plurality of the battery compartments (51), wherein two ends of each battery module (30), arranged oppositely along the gravitational direction, are thermally connected to corresponding liquid cooling plates (10).

2. The battery pack (100) according to claim 1, wherein the plurality of the liquid cooling plates (10) comprise a first liquid cooling plate (11) located at a lowest position along the gravitational direction;
the plurality of the side frames (20) comprise a first side frame (21), and the first side frame (21) is installed on a side of the first liquid cooling plate (11) facing away from the gravitational direction; and
the battery pack (100) further comprises an end plate (40) and a first electrical component (61), the end plate (40) is disposed on a side of the first side frame (21) facing away from the battery compartment (51), the end plate (40), the side frame (20), and the first liquid cooling plate (11) collectively enclose and form a first electrical compartment (52), and the first electrical component (61) is installed in the first electrical compartment (52).

3. The battery pack (100) according to claim 2, wherein the plurality of the liquid cooling plates (10) comprise a second liquid cooling plate (12) connected to the first side frame (21);
the plurality of the side frames (20) further comprise at least two second side frames (22), the plurality of the second side frames (22) are connected to a side of the second liquid cooling plate (12) facing away from the gravitational direction, the plurality of the second side frames (22) are arranged spaced apart, and each second side frame (22) comprises one of the battery modules (30) installed therein.

4. The battery pack (100) according to claim 3, wherein the plurality of the liquid cooling plates (10) further comprise a third liquid cooling plate (13), the third liquid cooling plate (13) comprises a plurality of sub-liquid cooling plates (131), the plurality of the sub-liquid cooling plates (131) are arranged in one-to-one correspondence with the plurality of the second side frames (22), and each sub-liquid cooling plate (131) is connected to a side of the corresponding second side frame (22) facing away from the second liquid cooling plate (12).

5. The battery pack (100) according to claim 4, further comprising a cover portion (70), wherein the cover portion (70) is disposed on a side of the first side frame (21) facing away from the gravitational direction, and a peripheral edge of the cover portion (70) is connected to a peripheral edge of the first side frame (21);
wherein the third liquid cooling plate (13), the second side frame (22), and the second liquid cooling plate (12) are located in the cover portion (70).

6. The battery pack (100) according to claim 5, wherein the cover portion (70) and the second liquid cooling plate (12) collectively enclose and form a second electrical compartment (53); and
the battery pack (100) further comprises a second electrical component (62), and the second electrical component (62) is installed in the second electrical compartment (53) and is electrically connected to the battery module (30) in the second side frame (22).

7. The battery pack (100) according to claim 5, wherein the cover portion (70) comprises:
a plurality of cover bodies (71), wherein the plurality of the cover bodies (71) are arranged in one-to-one correspondence with the plurality of the second side frames (22), and each cover body (71) is to cover the corresponding second side frame (22) and sub-liquid cooling plate (131); and
a connecting main body (72) surrounding a peripheral side of the plurality of the cover bodies (71) and connected to an end of the plurality of the cover bodies (71) adjacent to the second liquid cooling plate (12), and a peripheral edge of the connecting main body (72) is connected to a peripheral edge of the first side frame (21).

8. The battery pack (100) according to any one of claims 1 to 7, wherein the side frame (20) comprises:
two edge beams (23) arranged oppositely and spaced apart along a first direction, wherein each edge beam (23) extends along a second direction, and the first direction, the second direction, and the gravitational direction are pairwise intersecting;
a plurality of longitudinal beams (24) arranged spaced apart along the second direction, wherein each longitudinal beam (24) extends along the first direction; and
a plurality of reinforcement members (25) arranged corresponding to end portions of the plurality of the longitudinal beams (24), wherein each reinforcement member (25) comprises a connecting seat (251) and an insertion portion (252) protruding from the connecting seat (251), the connecting seat (251) is fixedly connected to the edge beam (23), the insertion portion (252) is inserted and engaged with an end portion of a corresponding one of the longitudinal beams (24), the insertion portion (252) has two first side walls (2521) arranged oppositely along the second direction, and the two first side walls (2521) are fixedly connected to a corresponding one of the longitudinal beams (24) via a plurality of connecting members (90).

9. The battery pack (100) according to claim 8, wherein the longitudinal beam (24) comprises:
a connecting portion (241) abutting the liquid cooling plate (10), wherein the connecting portion (241) has two first sides arranged oppositely along the second direction; and
two protruding portions (242) protruding from the two first sides, wherein each protruding portion (242) is welded to the liquid cooling plate (10).

10. The battery pack (100) according to any one of claims 1 to 7, further comprising a reinforcing member (110), wherein the reinforcing member (110) is connected to at least two of the plurality of the liquid cooling plates (10), and the reinforcing member (110) is to support the side frame (20) between at least two of the liquid cooling plates (10).

11. The battery pack (100) according to claim 10, wherein the side frame (20) between at least two of the liquid cooling plates (10) comprises a second side frame (22), a through hole (221) is provided in the second side frame (22), and the through hole (221) penetrates the second side frame (22) along the gravitational direction; and
the reinforcing member (110) is arranged corresponding to the through hole (221), and a portion of the reinforcing member (110) is inserted into the through hole (221).

12. The battery pack (100) according to claim 11, wherein at least two of the plurality of the liquid cooling plates (10) connected to the reinforcing member (110) comprise a second liquid cooling plate (12) and a third liquid cooling plate (13), a mounting hole (14) is provided in one of the third liquid cooling plate (13) and the second liquid cooling plate (12), and the mounting hole (14) is arranged corresponding to the through hole (221);
a first threaded hole (15) is provided in the other of the third liquid cooling plate (13) and the second liquid cooling plate (12), and the first threaded hole (15) is arranged corresponding to the through hole (221); and
the reinforcing member (110) comprises a first threaded connector (1101), and a threaded end of the first threaded connector (1101) passes through the mounting hole (14) and the through hole (221) and is threadedly connected to the first threaded hole (15).

13. The battery pack (100) according to any one of claims 10 to 12, wherein the reinforcing member (110) is a plurality of reinforcing members (110), and the plurality of the reinforcing members (110) are arranged spaced apart along a circumferential direction of the second side frame (22).

14. The battery pack (100) according to claim 13, wherein the second side frame (22) comprises two expansion beams (222) arranged oppositely; and
the plurality of the reinforcing members (110) are distributed across the two expansion beams (222).

15. The battery pack (100) according to any one of claims 11 to 14, wherein the side frame (20) between at least two of the liquid cooling plates (10) further comprises a first side frame (21), the first side frame (21) is adjacent to the second side frame (22), and the reinforcing member (110) is connected to the first side frame (21).

16. The battery pack (100) according to any one of claims 1 to 15, further comprising a filler, wherein the filler fills a gap between the side frame (20) and the battery module (30).

17. The battery pack (100) according to any one of claims 1 to 16, wherein, along a thickness direction of the liquid cooling plate (10), the battery module (30) has a top and a bottom, and the bottom of the battery module (30) is thermally connected to one of adjacent two of the liquid cooling plates (10); and
the battery pack (100) further comprises a plurality of elastic thermally conductive portions (120), and the top of each battery module (30) is thermally connected to the other of adjacent two of the liquid cooling plates (10) via one of the elastic thermally conductive portions (120).

18. The battery pack (100) according to claim 17, wherein the elastic thermally conductive portion (120) comprises a thermally conductive gel.

19. The battery pack (100) according to claim 17 or 18, wherein a thickness of the elastic thermally conductive portion (120) is H1, wherein 3 mm ≤ H1 ≤ 5 mm.

20. The battery pack (100) according to any one of claims 17 to 19, wherein the other of adjacent two of the liquid cooling plates (10) has a first side surface (132) facing a top of the corresponding battery module (30), and the first side surface (132) has a first heat exchange zone;
along a thickness direction of the liquid cooling plate (10), a projection of the battery module (30) on the other of adjacent two of the liquid cooling plates (10) is located within the first heat exchange zone; and
at least a portion of the elastic thermally conductive portion (120) covers the first heat exchange zone.

21. The battery pack (100) according to claim 20, wherein a first groove is provided in a side of the other of adjacent two of the liquid cooling plates (10) facing a top of the battery module (30), and the first groove is located in the first heat exchange zone; and
the elastic thermally conductive portion (120) is located in the first groove.

22. The battery pack (100) according to any one of claims 17 to 21, further comprising a plurality of first thermally conductive members (130), wherein the bottom of each battery module (30) is thermally connected to a corresponding one of the liquid cooling plates (10) via one of the first thermally conductive members (130).

23. The battery pack (100) according to claim 22, wherein the first thermally conductive member (130) comprises at least one of a thermally conductive structural adhesive or a thermally conductive filler.

24. The battery pack (100) according to claim 22, wherein a thickness of the first thermally conductive member (130) is H2, wherein 3 mm ≤ H2 ≤ 5 mm.

25. The battery pack (100) according to any one of claims 22 to 24, wherein one of adjacent two of the liquid cooling plates (10) has a second side surface (133) facing a bottom of the battery module (30), and the second side surface (133) has a second heat exchange zone;
along a thickness direction of the liquid cooling plate (10), a projection of the battery module (30) on one of adjacent two of the liquid cooling plates (10) is located within the second heat exchange zone; and
at least a portion of the first thermally conductive member (130) covers the second heat exchange zone.

26. The battery pack (100) according to claim 25, wherein a second groove is provided in a side of one of adjacent two of the liquid cooling plates (10) facing a bottom of the battery module (30), and the second groove is located in the second heat exchange zone; and
the first thermally conductive member (130) is located in the second groove.

27. The battery pack (100) according to any one of claims 1 to 26, further comprising a plurality of heating portions (140), wherein the plurality of the heating portions (140) are arranged corresponding to and connected to the plurality of the liquid cooling plates (10) and are to heat the battery module (30).

28. The battery pack (100) according to claim 27, wherein a third groove (16) is provided in the liquid cooling plate (10); and
the heating portion (140) is embedded in the third groove (16).

29. The battery pack (100) according to claim 28, wherein a surface of the heating portion (140) facing away from the third groove (16) is flush with or below a peripheral edge of the third groove (16).

30. The battery pack (100) according to any one of claims 27 to 29, wherein the heating portion (140) comprises a plurality of heating plates (141), and the plurality of the heating plates (141) are arranged spaced apart along an extension direction of the liquid cooling plate (10).

31. The battery pack (100) according to claim 30, wherein the battery module (30) comprises a plurality of battery cells (31), and each of a bottom and a top of each battery cell (31) corresponds to one of the heating plates (141).

32. The battery pack (100) according to claim 31, wherein the plurality of the heating plates (141) comprise a first heating plate (1411) located at a top of the battery cell (31), and the first heating plate (1411) is located at a central location of the top of the battery cell (31).

33. The battery pack (100) according to claim 32, wherein the plurality of the heating plates (141) comprise a second heating plate (1412) located at a bottom of the battery cell (31), and the second heating plate (1412) is located at a central location of the bottom of the battery cell (31).

34. The battery pack (100) according to any one of claims 27 to 33, wherein the plurality of the liquid cooling plates (10) comprise a second liquid cooling plate (12), the second liquid cooling plate (12) has two second sides arranged oppositely along a thickness direction of the second liquid cooling plate (12), one of the battery modules (30) is provided on each second side, and a heating portion (140) is disposed between the second side and the battery module (30).

35. The battery pack (100) according to any one of claims 27 to 34, wherein the heating portion (140) comprises a positive temperature coefficient thermistor or a constant resistance heating element.

36. The battery pack (100) according to any one of claims 27 to 35, further comprising a plurality of second thermally conductive members (180), wherein the liquid cooling plate (10) and the heating portion (140) are thermally connected to the battery module (30) via the second thermally conductive members (180).

37. An electrical device, comprising the battery pack (100) according to any one of claims 1 to 36.
